# EUROPEAN PATENT SPECIFICATION

(11) **EP 0 675 683 B1**
(45) Date of publication and mention of the grant of the patent: **21.05.1997**
(21) Application number: 94903837.6
(22) Date of filing: 16.12.1993
(51) Int. Cl.: A23F 3/16, A23F 3/18

(54) **PROCESS FOR MANUFACTURING COLD WATER SOLUBLE AND CHILL STABLE READY TO DRINK TEA**
VERFAHREN ZUR HERSTELLUNG VON IN KALTEM WASSER LÖSLICHEM UND KALTSTABILEM TRINKFERTIGEN TEE
PROCEDE DE FABRICATION DE THE PRET-A-BOIRE SOLUBLE DANS L'EAU FROIDE ET STABLE AU FROID

(30) Priority: 22.12.1992 US 994814
(43) Date of publication of application: 11.10.1995
(73) Proprietor: UNILEVER PLC, London EC4P 4BQ (GB); UNILEVER N.V., 3013 AL Rotterdam (NL)
(72) Inventor: BALANTINE, Douglas Ashley, West Milford, NJ 07480 (US); TOBIN, John William, Hillsdale, NJ 07642 (US)
(74) Representative: Butler, David John
(86) International application number: EP9303616
(87) International publication number: WO9414328

(56) References cited:
- EP-A- 0 416 667
- FR-A- 2 080 271
- FR-A- 2 122 414
- US-A- 3 619 205
- US-A- 4 051 267
- US-A- 4 311 720
- US-A- 4 332 824
- US-A- 4 748 033
- CHEMICAL ABSTRACTS, vol. 108, no. 9, 29 February 1988, Columbus, Ohio, US; abstract no. 74078b, cited in the application

## Description

### FIELD OF THE INVENTION

This invention generally relates to a process for manufacturing a "crystal clear" cold water soluble, chill stable, and acid stable ready-to-drink tea, as well as to the product produced thereby.

### BACKGROUND OF THE INVENTION

The production of cold water soluble ready-to-drink iced tea beverages which are crystal clear, cold water soluble and stable when the formulation is acidified for balanced fruit flavors and/or microbiological stability has been difficult to achieve, when using either fresh brewed tea solids or instantized tea ingredients. When all natural, real brewed tea based products are to be produced, preparation of clear beverages is especially difficult due to tea cream formation and acid instability. This is especially evident when the preferred black teas are employed.

JP-A-62228227 (Chemical Abstract Vol.108:740786) discloses adding pectin and/or propylene glycol alginate and/or CM-cellulose to red tea to prevent turbidity.

Cold extraction of vegetable matter is disclosed in German patent application DE 3203100A1 disclosure date 8/4/83 and Canadian patent 927664.

A cloud system for beverage mixes containing methoxy pectin is disclosed in U.S. 4,529,613.

JP 4045744 discloses ultrafiltration of green tea to preserve it by removing high molecular weight components one of which is pectin.

### SUMMARY OF THE INVENTION

Preparation of instant teas is well known in the art and generally involves extraction of tea through innumerable well known processes. The extract may then be treated enzymatically or chemically to render it soluble in cold water and to, in some cases, develop desirable color. The extract is also preferably clarified by known means such as filtration or centrifugation. The extract is then concentrated and dried preferably to a level of 5% moisture or less again by means known to the art. Preparation of tea solids for subsequent dissolution is disclosed in, for example, GB patent 2,208,096A and U.S. 3,666,484 both of which are incorporated by reference herein.

In one embodiment of this invention such powdered instant teas are substantially dissolved in water to form tea solutions which are then treated according to the processes of the invention with gum arabic.

In another embodiment the invention also involves the extraction of tea or blends of tea, preferably low creaming black teas at temperatures of less than 82°C(180°F) using a preferred water to leaf ratio of 4:1 to 30:1 preferably in a fixed or static bed extractor. The tea extract, which can be black, green, oolong or mixtures of these is used to formulate a "ready to drink" tea beverage at pH 4.5 or below. The amount of tea extract used to formulate the beverage is regulated to provide a concentration of tea solids in the beverage of 0.3% or less. Sweeteners, acids and other flavors can be added to achieve beverages with desired flavor characteristics.

Gum arabic according to the invention is added at a beverage concentration of 50-500 ppm to impart improved flavor and produce acid stability.

In one aspect the unique combination of low temperature extraction of low creaming teas in a fixed bed extractor to create a tea extract free from leaf fines, the use of this extract to deliver tea solids to a beverage at 0.3% or less and the addition of the selected gum arabic results in the preparation of all natural brewed tea based ready-to-drink products. The product, produced using this process, whether instant tea or fresh brewed tea extract is employed, can be packaged into cans, bottles or brick packs by thermal processing or by the use of preservatives for microbiological stability. These products remain substantially crystal clear and free from sedimentation when stored under refrigerated or ambient temperatures for at least 6 months. In addition, the product prepared using this inventive process is significantly preferred when tested using research panels.

### DETAILED DESCRIPTION OF THE INVENTION

Instant teas prepared by methods well known to those skilled in the art can be used to advantage with the process of the invention. Most instant teas when used to create acidified ready-to-drink beverage develop haze and floc upon storage.

Black teas, particularly those selected to have a low cream index and which produce highly colored infusions are essentially preferred for the process but, of course, Green and Oolong teas may also be employed if appropriate care is taken.

Preferably, black tea with the above characteristics is extracted with water at a temperature of about 16°C to 82°C (60°F to 180°F⁾ at water to leaf ratios of from about 4:1 to 30:1. Higher or lower water to leaf ratios could be employed but are impractical. It is preferred to extract the tea at about 32°C (90°F) at a water to leaf ratio of 10:1.

The extraction process is conducted in a vessel such as a column where tea leaf remains static or fixed as a bed of from 15-51 cm (6 inches to 20 inches), but most preferably 36-38 cm (14-15 inches). Extraction of the tea leaves in such a static bed allows for good yield of tea solids and the resulting extract is substantially free of insoluble materials. Extraction of the tea as a loose leaf in agitated extractors such as a kettle or in continuous extractors can also produce extracts of the desired chemical composition and flavor for producing the desired low creaming ready-to-drink beverage but require additional processing through equipment such as centrifuges or filters to remove leaf fines. Extraction of the tea at low temperature selectively removes desirable tea flavor components, color, and results in a polyphenol profile which will not form tea cream when formulated into beverages at a tea solids level of 0.3% or less. When black teas which are high cream formers are extracted at low temperature, or black teas are extracted at elevated temperatures, these teas will form cream in beverage formulations

Unless the cream is removed or the tea is treated using chemicals or enzymes. These steps are costly and result in loss of tea flavor.

Preparation of tea beverages either instant or fresh brewed with fruit flavors requires acidification to a pH of 2.5-4.5 to result in formulations with a desirable flavor balance. Fruit flavored beverages prepared from either brewed tea solids or instant tea solids when rendered cold water soluble by methods known to those skilled in the art can be initially clear, especially if the extraction process described above is followed, but gradually develop haze. Sedimentation of solids from these beverages occurs after storage for periods of time ranging from as short as a week to as long as 6-12 weeks. The haze and sediment which forms is not typical tea cream but rather is an insoluble complex which forms as a result of exposure to acidic conditions below about pH 4.5. The formation of this insoluble complex, which results in floc and haze is accelerated by elevated temperature ie 49°C (120°F) and is retarded by refrigerated storage. This insoluble complex is different from tea cream which is chiefly composed of caffeine and the tea polyphenols, theaflavins and thearubigens. This complex is low in caffeine and contains high molecular weight materials of 1000 daltons or more. The floc and haze resulting from this complex can be solubilized by raising the pH of the solution above about 4.5 but rapidly returns when the beverage is acidified below about pH 4.5. It has been found that the addition of gum arabic at concentrations from about 50 ppm to 500 ppm on a beverage basis preferably 100 to 300 ppm will significantly reduce the development of haze and prevents sedimentation of material from beverages in the pH range of 2.5 to 4.5. Beverages prepared using either the instant tea or the tea extract from the process described above will remain crystal clear and sediment free when formulated at pH 4.5 and below. It the addition of gum arabic to tea beverage formulations well significantly improve the acceptability of the product when evaluated for flavor using research test panels.

In practice the acidified tea beverages can be stabilized by the addition of 50-500 ppm of gum arabic such as on a beverage basis. Higher levels of gum arabic can be employed but induce changes is flavor and beverage acceptability. The gum arabic for example is solubilized in water and can be added to the tea solution prior to acidification or following addition of flavoring components and acid. It is preferred to add the gum arabic prior to acidification to provide the maximum benefit of the gum arabic. The gum arabic could also be dry blended with the tea leaves and rendered soluble during the extraction process. The resulting beverage can be packaged and preserved by the addition of antimicrobial agents such as sodium benzoate and sorbic acid or by thermal processing.

Gum arabic or acacia is a dried gummy exudation obtained from the stems and branches of Acacia Senegal (L.) Willd and is described in a Monograph entitled Food Chemical Codex 1984 page 7 and in Lewis, R.J. Food additivies Handbook New York van Nostraand Reinhold (1989) AQQ 500 page 66. Methods for analysis of acacia can be found in "Gums and Stabilizers for the Food Industry 4" Ed. by Phillips et al. IRL Press Washington D.C. pages 489 to 496 (1988). This gum has been described as a natural polysaccharide having a molecular weight of 240,000 and has been used in food for various purposes such as Emulsifier, flavoring agent, formulation aid, humectant, stabilizer, surface finalizing agent and thickener in many different types of foodstuffs at various levels. It is a heteropolymolecular substance consisting of molecules differing not only in molecular mass but also chemically in the relative proportion and mode of linking of the monomer sugar units. The gum contains galactose, arabinose, rhamnose and glucuronic acid residues and the main structural feature is a backbone of β-galactopyranose units linked through the 1,3 positions with side chains of 1,6 linked galactopyranose units terminating in glucuronic acid or 4-0-methyl glucuronic acid residues. In addition it has been found that there is a small amount of protein present within the material which forms an integral part of the structure.

### EXAMPLE 1

Fresh brewed extracts of black tea were prepared by extraction of 227 Kg (500 pounds) of low creaming black tea blend. The tea was filled into a cylindrical column extractor 1.5 M (5 feet) in diameter by 0.9 M (3 feet) in height. The bed of tea when filled into the extractor had a bed height of 25.4 cm (10 inches). Water at 32°C (90°F) was sprayed onto the surface of the bed of tea until 2270 litres (600 US gallons) of water was added. The resulting brewed tea extract was used to prepare a syrup from which ready-to-drink beverages would be prepared. The beverage syrup was formulated by adding 1461.25 grams of high fructose corn sweetener to 720 grams of black tea extract followed by the addition of a lemon flavor system. Water was added to adjust the final volume to 12.5 Kg. The syrup was split into 5 batches of 2400 grams. Various amounts of gum arabic (0.06 g, 0.12g, 0.24g, 0.36g, and 0.0 g (control) were each first dry blended with 4.608 grams of citric acid and the resulting blend dissolved into a 2400 g batches of beverage syrup. The beverages were hot packed into 470 millilitre (16 US fluid ounce) glass bottles at 88°C (190°F). The products were placed into storage at 49°C (120°F) and evaluated for development of cloud and for flavor quality.

After one week of storage the control product without gum arabic had begun to develop a significant quantity of haze and showed slight sedimentation. The samples containing gum arabic all were substantially clearer than the control and were free from sediment. All gum arabic samples were tasted versus control products and were found to be unaffected by the addition of the gum arabic hydrocolloid.

All parts, percentages and proportions contained herein are by weight unless otherwise specified.

It is understood that the examples and embodiments described herein are for illustrative purposes only and that various modifications or changes in the light thereof will be suggested to persons skilled in the art and are to be included within the spirit and purview of this application and the scope of the appended claims. All parts and proportions herein are by weight unless otherwise specified.

## Claims

1. A process for preparing stabilized acidified liquid tea products comprising:
a) substantially dissolving in water to form a tea solution, a concentrated powdered tea product at a level of about 0.3% tea solids or less, said powdered tea product being obtained by reducing the moisture content of a tea solution to a level not exceeding about five percent by weight on a tea solids basis;
b) acidifying said tea solution to a pH of about 4.5 or less, if said tea solution is not already at said pH; and;
c) adding a sufficient amount of gum arabic to said acidified tea product to result in a total amount of said gum arabic in said acidified tea product of about 50 to about 500 parts per million (ppm),
wherein the resulting acidified liquid tea product remains substantially clear and free from sediment when stored under refrigerated or ambient temperatures.

2. A process as defined in claim 1 wherein said concentrated powdered tea product is made from tea solids which are obtained from a black tea selected for its low cream index and which is extracted at a temperature of about 16°C to about 82°C (about 60°F to about 180°F) at a water to leaf ratio of about 4:1 to about 30:1.

3. A process as defined in claim 1 wherein said powdered tea product is obtained by spray drying.

4. A process as defined in claim 1 wherein said powdered tea product is obtained by freeze drying.

5. A process as defined in claim 1 wherein said pH is about 2.8 to 3.2.

6. A process for preparing an acidified final liquid tea product stabilized from development of haze and sedimentation upon storage and having superior flavor comprising performing, in any order, the steps of:
a) extracting tea leaves with water at a temperature of less than about 82°C (180°F) and a water to leaf ratio of about 4:1 to 30:1 to prepare a fresh brewed tea extract infusion clear of insoluble materials, then adjusting the brewed tea solids of said infusion, if necessary, to a level of 0.3% by weight or less of solids to form a tea product;
b) adding a sufficient amount of gum arabic to result in a total amount of said gum arabic of about 50 to 500 parts per million (ppm) in said tea product; and
c) adjusting the pH of said tea product, if necessary, to a pH of about 4.5 or less to form said acidified final liquid tea product,
wherein the resulting acidified liquid tea product remains substantially clear and free from sediment when stored under refrigeration or ambient temperatures.

7. A process as defined in claim 6 wherein said tea extract is concentrated or made into a powder by drying before being used to prepare said product.

8. A process as defined in claim 7 wherein said powdered tea product is obtained by spray drying.

9. A process as defined in claim 7 wherein said powdered tea product is obtained by freeze drying.

10. A process as defined in claim 6 wherein the pH of said product is about pH 2.8 to 3.2.

11. A process as defined in claim 6 wherein the tea extract is rendered cold water soluble by treatment with chemicals or enzymes.

12. A process as defined in claim 6 wherein said tea is selected from the group consisting of green tea, oolong tea, black tea and mixtures thereof.

## Patentansprüche

1. Verfahren zur Herstellung stabilisierter angesäuerter flüssiger Tee-Produkte, welches umfaßt:
a) im wesentlichen Lösen eines konzentrierten pulverförmigen Tee-Produkts in Wasser in einer Konzentration von etwa 0,3 % Teefeststoffe oder weniger zur Bildung einer Teelösung, wobei das pulverförmige Tee-Produkt durch die Verringerung des Feuchtigkeitsgehalts einer Teelösung auf einen Wert von nicht mehr als etwa 5 %, bezogen auf die Masse der Teefeststoffe, erhalten wird;
b) Ansäuern der Teelösung auf einen pH von etwa 4,5 oder weniger, wenn die Teelösung nicht bereits auf diesem pH ist; und
c) Zusetzen einer ausreichenden Menge an Akaziengummi zum angesäuerten Tee-Produkt, um eine Gesamtmenge an Akaziengummi von etwa 50 bis etwa 500 ppm im angesäuerten Tee-Produkt zu ergeben;
wobei das erhaltene angesäuerte flüssige Tee-Produkt im wesentlichen klar und frei von Sediment bleibt, wenn es unter Kühl- oder Umgebungstemperaturen gelagert wird.

2. Verfahren nach Anspruch 1, bei welchem das konzentrierte pulverförmige Tee-Produkt aus Teefeststoffen besteht, die von einem Schwarzen Tee erhalten werden, der wegen seines niedrigen Aufrahmungsindex ausgewählt wird, und der bei einer Temperatur von etwa 16°C bis etwa 82°C (etwa 60°F bis etwa 180°F) in einem Wasser-Blätter-Verhältnis von etwa 4:1 bis etwa 30:1 extrahiert wird.

3. Verfahren nach Anspruch 1, bei welchem das pulverförmige Tee-Produkt durch Sprühtrocknung erhalten wird.

4. Verfahren nach Anspruch 1, bei welchem das pulverförmige Tee-Produkt durch Gefriertrocknung erhalten wird.

5. Verfahren nach Anspruch 1, bei welchem der pH etwa 2,8 bis 3,2 beträgt.

6. Verfahren zur Herstellung eines angesäuerten flüssigen Tee-Endprodukts, das gegen eine Trübungs- und Sedimententwicklung bei der Lagerung stabilisiert ist und ein überlegenes Aroma aufweist, welches Verfahren in beliebiger Reihenfolge die Durchführung der Schritte umfaßt:
a) Extrahieren von Teeblättern mit Wasser bei einer Temperatur von weniger als etwa 82°C (180°F) und einem Wasser-Blätter-Verhältnis von etwa 4:1 bis 30:1 zur Herstellung einer frisch aufgebrühten Tee-Extraktinfusion frei von unlöslichen Materialien, dann Einstellen der aufgebrühten Teefeststoffe der Infusion, wenn notwendig, auf eine Konzentration von 0,3 Masse-% Feststoffe oder weniger zur Bildung eines Tee-Produkts;
b) Zusetzen einer ausreichenden Menge an Akaziengummi, um eine Gesamtmenge an Akaziengummi von etwa 50 bis 500 ppm im angesäuerten Tee-Produkt zu ergeben; und
c) Einstellen des pH des Tee-Produkts, wenn notwendig, auf einen pH von etwa 4,5 oder weniger zur Bildung des angesäuerten flüssigen Tee-Endprodukts;
wobei das erhaltene angesäuerte flüssige Tee-Produkt im wesentlichen klar und frei von Sediment bleibt, wenn es unter Kühl- oder Umgebungstemperaturen gelagert wird.

7. Verfahren nach Anspruch 6, bei welchem der Tee-Extrakt konzentriert oder pulverisiert wird, indem er vor der Verwendung getrocknet wird, um das Produkt herzustellen.

8. Verfahren nach Anspruch 7, bei welchem das pulverförmige Tee-Produkt durch Sprühtrocknung erhalten wird.

9. Verfahren nach Anspruch 7, bei welchem das pulverförmige Tee-Produkt durch Gefriertrocknung erhalten wird.

10. Verfahren nach Anspruch 6, bei welchem der pH des Produkts etwa 2,8 bis 3,2 beträgt.

11. Verfahren nach Anspruch 6, bei welchem der Tee-Extrakt durch Behandlung mit Chemikalien oder Enzymen in kaltem Wasser löslich gemacht wird.

12. Verfahren nach Anspruch 6, bei welchem der Tee aus der Gruppe bestehend aus Grünem Tee, Oolong-Tee, Schwarzem Tee und Mischungen hievon ausgewählt wird.

## Revendications

1. Procédé de préparation de produits de thé liquides acidifiés stabilisés consistant à :
a) dissoudre sensiblement dans l'eau pour former une solution de thé, un produit de thé en poudre concentré en une proportion d'environ 0,3% de solides de thé ou moins, ledit produit de thé en poudre étant obtenu par la réduction de la teneur en humidité d'une solution de thé à une proportion n'excédant pas environ 5% en poids par rapport aux solides de thé ;
b) à acidifier ladite solution de thé à un pH d'environ 4,5 ou moins, Si ladite solution de thé n'est pas déjà audit pH ; et
c) à ajouter une quantité suffisante de gomme arabique audit produit de thé acidifié pour donner une quantité totale de ladite gomme arabique dans ledit produit de thé acidifié d'environ 50 à 500 parties par million (ppm),
dans lequel le produit de thé liquide acidifié résultant reste sensiblement limpide et exempt de sédiment quand on le stocke à des températures de réfrigération ou ambiantes.

2. Procédé selon la revendication 1, dans lequel le produit de thé en poudre concentré est préparé à partir de solides de thé qui sont obtenus à partir de thé noir choisi pour son faible indice de crème et qu'on extrait à une température d'environ 16°C à environ 82°C (environ 60°F à environ 180°F) à un rapport eau:feuille d'environ 4:1 à environ 30:1.

3. Procédé selon la revendication 1, dans lequel ledit produit de thé en poudre est obtenu par séchage par pulvérisation.

4. Procédé selon la revendication 1, dans lequel ledit produit de thé en poudre est obtenu par lyophilisation.

5. Procédé selon la revendication 1, dans lequel ledit pH est d'environ 2,8 à 3,2.

6. Procédé de préparation d'un produit de thé liquide final acidifié stabilisé contre le développement de trouble et la sédimentation au stockage et ayant un arôme supérieur consistant à effectuer, dans n'importe quel ordre, les stades de :
(a) extraction des feuilles de thé avec de l'eau à une température inférieure à environ 82°C (180°F) et un rapport eau:feuille d'environ 4:1 à 30:1 pour préparer une infusion d'extrait de thé fraîchement infusé exempte de matières insolubles, à régler ensuite les solides de thé infusé de ladite infusion, si nécessaire, à une proportion de 0,3% en poids ou moins de solides pour former un produit de thé ;
(b) ajout d'une quantité suffisante de gomme arabique pour donner une quantité totale de ladite gomme arabique d'environ 50 à 500 parties par million (ppm) dans ledit produit de thé ; et
(c) réglage du pH dudit produit de thé, si nécessaire, à un pH d'environ 4,5 ou moins pour former ledit produit de thé final acidifié,
dans lequel le produit de thé liquide acidifié résultant reste sensiblement limpide et exempt de sédiment lors du stockage aux températures de réfrigération ou ambiantes.

7. Procédé selon la revendication 6, dans lequel ledit extrait de thé est concentré ou préparé en poudre par séchage avant d'être utilisé pour préparer ledit produit.

8. Procédé selon la revendication 7, dans lequel ledit produit de thé en poudre est obtenu par séchage par pulvérisation.

9. Procédé selon la revendication 7, dans lequel ledit produit en poudre est obtenu par lyophilisation.

10. Procédé selon la revendication 6, dans lequel le pH dudit produit est d'environ 2,8 à 3,2.

11. Procédé selon la revendication 6, dans lequel on rend l'extrait de thé soluble dans l'eau froide par traitement avec des produits chimiques ou des enzymes.

12. Procédé selon la revendication 6, dans lequel ledit thé est choisi dans le groupe consistant en thé vert, thé oolong, thé noir et leurs mélanges.
